# FASCICULE DE BREVET EUROPEEN

(11) **EP 2 879 880 B1**
(45) Date de publication et mention de la délivrance du brevet: **12.09.2018**
(21) Numéro de dépôt: 13747473.0
(22) Date de dépôt: 22.07.2013
(51) Int. Cl.: C09D 11/037, C09D 11/033, C09D 11/106, B41M 1/12, B41M 1/30, B05D 5/06

(54) **VITRAGE FEUILLETÉ COMPRENANT UNE COUCHE DE MATÉRIAU POLYMÈRE IMPRIMÉE EN COULEURS PAR SÉRIGRAPHIE**
VERBUNDGLAS ENTHALTEND EINE GEFÄRBTE, DURCH SIEBDRUCK AUF EINE POLYMERE FOLIE DRUCKBARE ZUSAMMENSETZUNG
LAMINATED GLASS COMPRISING A COLORED COMPOSITION, SCREEN PRINTABLE ON A POLYMERIC SHEET

(30) Priorité: 31.07.2012 FR 1257429
(43) Date de publication de la demande: 10.06.2015
(73) Titulaire: Saint-Gobain Glass France, 92400 Courbevoie (FR)
(72) Inventeur: WERY, Sébastien, 84800 Isle Sur La Sorgue (FR); DUCOURTHIAL, Elodie, F-60200 Compiegne (FR); RAMI, Jérome, F-60150 Thourotte (FR); BARBIER, Benoît, B-1090 Jette (BE); DASSONVILLE, Camille, 60200 Compiègne (FR); MOREL, Angélique, F-60200 Compiegne (FR)
(74) Mandataire: Saint-Gobain Recherche
(86) Numéro de dépôt international: PCT/FR2013/051760
(87) Numéro de publication internationale: WO 2014/020261

(56) Documents cités:
- WO-A1-2010/037691
- CH-A5- 606 366
- US-A- 5 316 574

## Description

L'invention est relative au domaine des vitrages feuilletés, communément constitués :
- de deux feuilles de verre collées l'une à l'autre par l'intermédiaire d'un intercalaire plastique, tel qu'une feuille de polyvinylbutyral, ou copolymère éthylène - acétate de vinyle...., ou
- d'une feuille de verre et d'une feuille de polycarbonate collées l'une à l'une par une feuille intercalaire de polyuréthane, ou
- d'une simple feuille de verre minéral ou de polycarbonate à laquelle est collée une feuille de polyuréthane...

Les vitrages feuilletés, tels qu'utilisés comme pare-brise de véhicule automobile, ou équivalent, comportent de nombreuses fonctionnalités : couche réfléchissant le rayonnement solaire, permettant d'abaisser la température du tableau de bord et la température ambiante dans l'habitacle, support de rétroviseur intérieur, bus-bars d'amenée de courant électrique notamment pour une couche ITO ou un réseau de fils chauffants, bande supérieure filtrant le rayonnement solaire, à coloration éventuellement dégradée, détecteur de pluie ... Les vitrages feuilletés sont ainsi imprimés à diverses fins : bord du vitrage opacifié sur toute sa périphérie pour protéger la colle sous-jacente du rayonnement UV et cacher des éléments de carrosserie ou joints de la vue d'un observateur à l'extérieur du véhicule, inscriptions relatives au fabricant, à diverses normes, surface opacifiée pour cacher l'embase du rétroviseur intérieur de la vue d'un observateur à l'extérieur du véhicule.

Il est habituel de réaliser de telles impressions sur feuilles de verre plat, c'est-à-dire le cas échéant avant des opérations de bombage (la difficulté d'imprimer sur des surfaces bombées est en effet bien supérieure). Un procédé préféré est la sérigraphie de l'émail : il est apte à procurer les qualités optiques requises : bonnes couvrance, opacité et résolution, et il est aisément industrialisable.

La sérigraphie sur feuilles de verre plat n'est pas sans inconvénient. Dans un feuilleté, l'émail est sérigraphié en face intérieure de la feuille de verre destinée à la position extérieure, c'est-à-dire en contact avec l'atmosphère, appelée face 2, et/ou en face extérieure de la feuille de verre destinée à la position intérieure, appelée face 4, qui est en contact avec l'atmosphère intérieure, notamment de l'habitacle d'un véhicule de transport.

Les inconvénients de l'émaillage en face 2, intérieure dans la structure du feuilleté assemblé, peuvent être décrits de la manière suivante. Les feuilles de verre lors de leur bombage, deux par deux, entrent en contact physique les unes avec les autres malgré la présence d'intercalaire poudreux, ou avec des éléments mécaniques des installations de bombage. Ce contact physique nécessite l'emploi préalable d'un four supplémentaire pour la recuisson de la composition d'impression, afin d'éviter que les surfaces imprimées insuffisamment durcies et séchées ne soient affectées : collage des deux feuilles de verre, malgré la séparation due à l'intercalaire poudreux, création de défauts à la surface de l'émail non durcie, par exemple. Cette recuisson est une étape supplémentaire du procédé qui engendre un coût supplémentaire sur ligne de production.

Dans l'émaillage de la face 4, extérieure dans la structure du feuilleté assemblé, la cuisson de l'émail induit de manière connue la création d'un défaut optique (en allemand : « Brennlinie »).

D'autres inconvénients communs à ces émaillages des faces 2 et 4 existent.

Tout d'abord il est nécessaire de définir un chauffage parfaitement adapté et différencié pour les zones émaillées d'une part, non émaillées d'autre part, car l'émail n'absorbe pas la même quantité de chaleur que le verre. Le chauffage doit être ainsi modifié pour chaque configuration de vitrage feuilleté, de pare-brise, avec et sans détecteur de pluie, de luminosité...

De plus, la densité de l'émail noir après la cuisson est de l'ordre de 3. Or des densités optiques légèrement supérieures à cette valeur peuvent être requises, ce qui ne peut être obtenu qu'en augmentant l'épaisseur d'émail déposée.

Ces problèmes pourraient être résolus en réalisant la sérigraphie sur les feuilles de matériau polymère rentrant dans la composition d'un vitrage feuilleté, telles qu'adhésives intercalaires à l'image des feuilles de polyvinylbutyral, et non plus sur les feuilles de verre.

Bien évidement cette modification de procédé ne doit en aucun cas affecter les spécifications du produit final : respect des normes et spécifications clients, non seulement d'un point de vue résistance mécanique, vieillissement mais également esthétique. Il convient de citer notamment :
- une bonne couvrance se traduisant par une faible quantité de « trous d'épingles » (pinholes) n'affectant pas la transparence de manière inacceptable,
- une opacité requise correspondant à une densité optique au moins égale à 3, de préférence à 4, telle que mesurée par un appareil X-Rite 341 ou équivalent,
- une résolution et un aspect d'impression acceptables pour le client, c'est-à-dire similaires à ceux de l'émaillage sur du verre.

D'autre part l'invention est plus particulièrement consacrée à l'impression colorée, par laquelle on fait ici référence à l'impression autre que noire, et notamment : grise, blanche, bleue, verte, rouge, jaune..., cette impression répondant à une demande croissante de personnalisation des véhicules, soit sur le plan esthétique, soit sur le plan technique, une couleur particulière pouvant indiquer par exemple un véhicule électrique... Or la technologie « émail » ne permet pas de répondre aux problématiques automobiles et ce pour plusieurs raisons. Pour les teintes rouge, orange ou jaune, de par des problématiques EHS (Environnement, Hygiène, Sécurité), les émaux standards contenant du cadmium pour avoir ces couleurs vives, il est désormais interdit de les utiliser. Les émaux rouge, orange ou jaune sans cadmium existent mais sont pastels et présentent une densité optique bien inférieure à 3. Concernant les teintes métallisées, bleu ou verte, la densité optique n'est pas suffisante. Pour garantir la densité optique de 3, il est nécessaire de réaliser une double impression avec une impression de noir derrière l'émail coloré. Cela complique le procédé et augmente les couts (prix matières premières ou encore perte potentielle de rendement sur les lignes de productions).

L'invention a donc pour but la mise à disposition d'un procédé de sérigraphie colorée sur feuille de matériau polymère de vitrage feuilleté, présentant la combinaison d'avantages précités, notamment réalisable en une seule passe avec des temps de « sec au toucher » n'excédant pas 30, de préférence 10 et en particulier 5 minutes. Les inconvénients liés aux émaillages en faces 2 et 4 décrits précédemment, en particulier la nécessité d'une étape supplémentaire mettant en oeuvre un four de recuisson (face 2), et la création du défaut optique en face 4, doivent être éliminés.

Ce but est atteint par l'invention qui a pour objet une composition adaptée à l'impression colorée par sérigraphie d'une feuille de matériau polymère destinée à faire partie d'un vitrage feuilleté, caractérisée en ce qu'elle comporte
- 10 à 15 % en masse de polyvinylbutyral,
- 32 à 45 % en masse d'au moins un solvant constitué majoritairement d'au moins un diester de diacide carboxylique aliphatique et
- au moins un pigment blanc en quantité et surface spécifique sélectionnées de manière que la viscosité Brookfield à 20 °C de la composition soit comprise entre 9 et 13 Pa.s.

Cette composition présente une rhéologie et une affinité (tension de surface) vis-à-vis de l'écran de sérigraphie et du substrat de matériau polymère la rendant parfaitement adaptée à ce procédé, notamment dans des conditions atmosphériques de travail, telles 10 à 25 °C, de préférence 12 à 15 °C et 20 à 70 %, de préférence au plus 30 % d'humidité, et qui garantissent un résultat d'impression équivalent à l'impression sur verre plat. L'encre ainsi développée permet d'obtenir avec une seule passe de sérigraphie les hautes qualités optiques, notamment l'absence de trous d'épingle et la densité optique suffisante précitées, simultanément à des temps de sec au toucher courts compatibles avec un procédé en ligne. De plus, la force de cohésion, ou l'adhésion les uns aux autres des constituants d'un vitrage feuilleté comprenant une feuille de matériau polymère imprimée par sérigraphie avec cette composition lui permettent de satisfaire aux critères en vigueur dans tous les pays. L'adhésion du feuilleté avec la feuille de matériau polymère (notamment adhésif intercalaire) imprimée est validée par différents essais mécaniques, parmi lesquels un essai de torsion et la chute de bille, via des valeurs seuil définies par des normes et des cahiers des charges constructeur.

La feuille de matériau polymère est adhésive intercalaire entre deux feuilles de verre, telle qu'en polyvinylbutyral, éthylène - acétate de vinyle, ... ou adhésive intercalaire entre une feuille de verre et, par exemple, une feuille de polycarbonate ou acrylique (polyméthacrylate de méthyle ou équivalent) telle qu'en polyuréthane, ou consiste en tout autre type de matériau polymère transparent, par exemple en polycarbonate, acrylique, une résine ionomère...

La feuille de matériau polymère imprimée satisfait également, dans le vitrage feuilleté, la réglementation en termes de vieillissement / résistance aux brouillards salins, résistance aux acides ou encore rayonnement UV garantissant ainsi la durabilité du produit fini quelles que soient ses conditions d'utilisations.

La couleur d'impression obtenue par cette composition est variable : blanc, toute nuance de gris, bleu color index PB15 :3, vert color index PG7, ..., chacun par ajout d'une quantité sélectionnée, par exemple de l'ordre de quelques % en masse, d'un ou plusieurs pigments correspondants.

Selon des caractéristiques préférées de la composition de l'invention :
- le polyvinylbutyral qu'elle contient a une masse moléculaire évaluée par chromatographie par perméation de gel centrée sur une valeur au plus égale à 90000 et, par ordre de préférence croissant, à 80000, 70000, 60000 et 50000 et au moins égale à 20000, de préférence à 30000 en équivalent polystyrène ;
- le taux d' [OH] du polyvinylbutyral qu'elle contient correspond à un pourcentage massique de poly (alcool vinylique) compris entre 17 et 22 % ;
- ledit au moins un diester de diacide carboxylique aliphatique est choisi parmi un succinate, un glutarate et un adipate, notamment de di(alkyle en C1 à C6), de préférence de diméthyle, diéthyle, dipropyle ou dibutyle, et de manière particulièrement préférée, de diméthyle, plusieurs de ces diesters pouvant être contenus en mélange ;
- ledit au moins un pigment blanc comprend le dioxyde de titane, de préférence rutile ;
- ledit au moins un pigment blanc est en quantité comprise entre 32 et 42 % en masse ;
- ledit au moins un solvant est constitué minoritairement d'éther de glycol, tel que d'éther diméthylique de triéthylène glycol ;
- elle contient 0,5 à 3 % en masse de noir de carbone ; ce constituant permet d'augmenter la densité optique ;
- elle comprend une quantité efficace de plastifiant en tant qu'agent mouillant, telle que 5 à 12 % en masse d'un ester de benzoate, d'un phtalate et/ou son dérivé, d'un adipate et/ou son dérivé, d'un ester d'acide gras, d'un trioctyltrimellitate, d'une triacetine, d'un glycérol, d'un propylèneglycol, d'un sorbitol ou d'un triméthylpentanedioldiisobutyrate, seul ou en mélange de plusieurs d'entre eux;
- elle comprend une quantité efficace d'agent de modification de la tension de surface ne contenant pas de silicone, notamment 0,5 à 2 % en masse de polyacrylate.

L'invention a d'autre part pour objets :
- un procédé d'impression par sérigraphie d'une feuille de matériau polymère destinée à faire partie d'un vitrage feuilleté, dans lequel on applique sur la feuille, à travers un écran de sérigraphie, une composition telle que décrite précédemment, de préférence en une épaisseur de la couche humide comprise entre 10 et 50 µm, et de manière particulièrement préférée au moins égale à 20 µm (la capacité de mise en oeuvre industrielle de ce procédé se manifeste notamment par le fait que cette épaisseur humide est de préférence atteinte en une seule passe de sérigraphie); pour une feuille de matériau polymère servant d'intercalaire dans un vitrage feuilleté, la composition chimique de l'encre a été optimisée afin de garantir qu'avec une faible épaisseur déposée, l'impression sur l'intercalaire garantisse une bonne qualité de dégazage et d'autoclavage, qui constituent des étapes obligatoires pour l'obtention d'un vitrage feuilleté ;
- une feuille de matériau polymère destinée à faire partie d'un vitrage feuilleté, et imprimée par sérigraphie au moyen d'une composition telle que décrite précédemment, la feuille de matériau polymère consistant de préférence en polyvinylbutyral ou en éthylène - acétate de vinyle, ou en tout autre matériau polymère transparent tel que polyuréthane, polycarbonate, polyméthacrylate de méthyle ou autre acrylique, résine ionomère...; et
- un vitrage feuilleté comportant une telle feuille de matériau polymère. L'invention est maintenant illustrée par les exemples suivants.

### EXEMPLE 1

Par sérigraphie d'une feuille intercalaire de polyvinylbutyral avec une encre de composition détaillée dans le tableau ci-dessous, on obtient après assemblage à deux feuilles de verre sodocalcique flotté, un vitrage feuilleté de haute qualité mécanique et à impression grise de haute qualité optique telles que décrites ci-dessus. Le temps de « sec au toucher » de 10 min est court et compatible avec un procédé industriel en ligne continue.

Dans le tableau ci-dessous, toutes les proportions sont indiquées en pourcentages massiques.

| CONSTITUANT | N° CAS | % EN MASSE | % MIN ET MAX EN MASSE |
|---|---|---|---|
| POLYVINYLBUTYRAL | 63148-65-2 | 13 | 10/15 |
| AGENT MOUILLANT | 27987-25-3 | 9,5 | 5/12 |
| NOIR DE CARBONE | 133386-4 | 1,5 | 0,5/3 |
| DIOXYDE DE TITANE RUTILE | 1317-80-2 | 36 | 32/42 |
| DI ESTER | 627-93-0 | 23 | 16/45 |
| | 1119-40-0 | | |
| | 106-65-0 | | |
| SOLVANT DIETHER DE GLYCOL | 112-49-2 | 16 | 0/22 |
| AGENT DE MODIFICATION DE LA TENSION DE SURFACE | 26376-86-3 | 1 | 0,5/2 |

On évalue la masse moléculaire du polyvinylbutyral de la manière suivante. On prépare des solutions de poudres de polyvinylbutyral à 3 g/l dans le tétrahydrofurane, puis on les injecte sur une colonne de chromatographie par perméation de gel de type Waters Styragel HR4E, 1 ml/min de tétrahydrofurane. Les chromatogrammes sont établis au moyen d'un détecteur évaporatif à diffusion de lumière. Le pic large observé à 7-7,1 min indique des masses en équivalent PS de 46000-55000, c'est-à-dire pratiquement centrées sur 50000.

Le taux d' [OH] du polyvinylbutyral correspond à un pourcentage massique de poly (alcool vinylique) de 18 %.

L'agent mouillant fait également office de plastifiant c'est-à-dire qu'il autorise une plus grande déformation du film d'encre imprimé sans dégradation de ses propriétés optiques. Il s'agit ici du dimethylcyclohexyl phtalate.

La surface spécifique du noir de carbone est de 65 m²/g, des valeurs de 40 à 150 m²/g convenant en général.

Le diester est un mélange de 60 % en masse de glutarate de diméthyle, 20 % en masse de succinate de diméthyle et 20 % en masse d'adipate de diméthyle.

Le solvant diéther de glycol est l'éther diméthylique de triéthylène glycol.

L'agent de modification de la tension de surface est un copolymère d'acrylate de 2-éthylhexyle; il ne contient pas de silicone.

La viscosité Brookfield de l'encre à 20 °C est de 11 Pa.s, des valeurs comprises entre 9 et 13 Pa.s convenant dans le cadre de l'invention. Cette mesure est effectuée de la manière suivante. On diminue la viscosité de l'encre à une valeur stable par rotation pendant au moins 8 heures d'un rouleau dans l'encre. Un échantillon de cette dernière est prélevé, sur lequel est mesurée la viscosité au moyen d'un viscosimètre cône-plan.

On mesure, au moyen d'un appareil X-Rite 341, une densité optique supérieure à 3, pour les motifs gris imprimés, sur le vitrage feuilleté. L'opacité requise est donc obtenue.

La résolution des motifs imprimés est satisfaisante.

L'adhésion du feuilleté à intercalaire imprimé est attestée par la satisfaction aux essais « bail drop » (bille tombante) selon le règlement N° 43, additif 42, de l'accord E/ECE/324, E/ECE/TRANS/505, concernant l'adoption de prescriptions techniques uniformes applicables aux véhicules à roues, aux équipements et aux pièces susceptibles d'être montés ou utilisés sur un véhicule à roues et les conditions de reconnaissance réciproque des homologations délivrées conformément à ces prescriptions.

## Revendications

1. Vitrage feuilleté comportant une feuille de matériau polymère imprimée en couleurs par sérigraphie au moyen d'une composition comportant :
- 10 à 15 % en masse de polyvinylbutyral,
- 32 à 45 % en masse d'au moins un solvant constitué majoritairement d'au moins un diester de diacide carboxylique aliphatique et
- au moins un pigment blanc en quantité et surface spécifique sélectionnées de manière que la viscosité Brookfield à 20 °C de la composition soit comprise entre 9 et 13 Pa.s.

2. Vitrage feuilleté selon la revendication 1, **caractérisé en ce que** le polyvinylbutyral de la composition a une masse moléculaire évaluée par chromatographie par perméation de gel centrée sur une valeur au plus égale à 90000 et, par ordre de préférence croissant, à 80000, 70000, 60000 et 50000 en équivalent polystyrène.

3. Vitrage feuilleté selon l'une des revendications précédentes, **caractérisé en ce que** le polyvinylbutyral de la composition a une masse moléculaire évaluée par chromatographie par perméation de gel centrée sur une valeur au moins égale à 20000, de préférence à 30000 en équivalent polystyrène.

4. Vitrage feuilleté selon l'une des revendications précédentes, **caractérisé en ce que** le taux d' [OH] du polyvinylbutyral de la composition correspond à un pourcentage massique de poly (alcool vinylique) compris entre 17 et 22 %.

5. Vitrage feuilleté selon l'une des revendications précédentes, **caractérisé en ce que** ledit au moins un diester de diacide carboxylique aliphatique est choisi parmi un succinate, un glutarate et un adipate.

6. Vitrage feuilleté selon l'une des revendications précédentes, **caractérisé en ce que** ledit au moins un pigment blanc comprend le dioxyde de titane.

7. Vitrage feuilleté selon l'une des revendications précédentes, **caractérisé en ce que** ledit au moins un pigment blanc comprend le dioxyde de titane rutile.

8. Vitrage feuilleté selon l'une des revendications précédentes, **caractérisé en ce que** ledit au moins un pigment blanc est en quantité comprise entre 32 et 42 % en masse de la composition.

9. Vitrage feuilleté selon l'une des revendications précédentes, **caractérisé en ce que** ledit au moins un solvant est constitué minoritairement d'éther de glycol.

10. Vitrage feuilleté selon l'une des revendications précédentes, **caractérisé en ce que** ledit au moins un solvant est constitué minoritairement d'éther diméthylique de triéthylène glycol.

11. Vitrage feuilleté selon l'une des revendications précédentes, **caractérisé en ce que** la composition contient 0,5 à 3 % en masse de noir de carbone.

12. Vitrage feuilleté selon l'une des revendications précédentes, **caractérisé en ce que** la composition comprend une quantité efficace de plastifiant en tant qu'agent mouillant.

13. Vitrage feuilleté selon l'une des revendications précédentes, **caractérisé en ce que** la composition comprend une quantité efficace d'agent de modification de la tension de surface ne contenant pas de silicone.

## Patentansprüche

1. Verbundglas, das eine Folie aus polymerem Material aufweist, die im Siebdruck mittels einer Zusammensetzung farbig bedruckt wird, die aufweist:
- 10 bis 15 Gew.-% Polyvinylbutyral,
- 32 bis 45 Gew.-% mindestens eines Lösungsmittels, das hauptsächlich aus einem aliphatischen Dicarbonsäurediester besteht, und
- mindestens ein Weißpigment in einer Menge und einer spezifischen Oberfläche, die so gewählt sind, dass die Brookfield-Viskosität der Zusammensetzung bei 20 °C zwischen 9 und 13 Pa.s liegt.

2. Verbundglas nach Anspruch 1, **dadurch gekennzeichnet, dass** das Polyvinylbutyral der Zusammensetzung ein durch Gelpermeationschromatographie bestimmtes Molekulargewicht aufweist, das auf einen Wert von höchstens 90.000, und in zunehmender Präferenzreihenfolge, 80.000, 70.000, 60.000 und 50.000, als Polystyroläquivalent, zentriert ist.

3. Verbundglas nach einem der vorhergehenden Ansprüche, **dadurch gekennzeichnet, dass** das Polyvinylbutyral der Zusammensetzung ein durch Gelpermeationschromatographie bestimmtes Molekulargewicht aufweist, das auf einen Wert von mindestens 20.000, vorzugsweise 30.000, als Polystyroläquivalent, zentriert ist.

4. Verbundglas nach einem der vorhergehenden Ansprüche, **dadurch gekennzeichnet, dass** der [OH]-Gehalt des Polyvinylbutyrals der Zusammensetzung einem Gewichtsanteil an Polyvinylalkohol zwischen 17 und 22 % entspricht.

5. Verbundglas nach einem der vorhergehenden Ansprüche, **dadurch gekennzeichnet, dass** der mindestens eine aliphatische Dicarbonsäurediester ausgewählt ist aus einem Succinat, einem Glutarat und einem Adipat.

6. Verbundglas nach einem der vorhergehenden Ansprüche, **dadurch gekennzeichnet, dass** das mindestens eine Weißpigment Titandioxid aufweist.

7. Verbundglas nach einem der vorhergehenden Ansprüche, **dadurch gekennzeichnet, dass** das mindestens eine Weißpigment das Titandioxid Rutil aufweist.

8. Verbundglas nach einem der vorhergehenden Ansprüche, **dadurch gekennzeichnet, dass** das mindestens eine Weißpigment in einer Menge zwischen 32 und 42 Gew.-% der Zusammensetzung vorliegt.

9. Verbundglas nach einem der vorhergehenden Ansprüche, **dadurch gekennzeichnet, dass** das mindestens eine Lösungsmittel aus einem Minderanteil an Glykolether besteht.

10. Verbundglas nach einem der vorhergehenden Ansprüche, **dadurch gekennzeichnet, dass** das mindestens eine Lösungsmittel aus einem Minderanteil an Triethylenglykoldimethylether besteht.

11. Verbundglas nach einem der vorhergehenden Ansprüche, **dadurch gekennzeichnet, dass** die Zusammensetzung 0,5 bis 3 Gew.-% Kohlenstoffschwarz enthält.

12. Verbundglas nach einem der vorhergehenden Ansprüche, **dadurch gekennzeichnet, dass** die Zusammensetzung eine wirksame Menge Weichmacher als Benetzungsmittel enthält.

13. Verbundglas nach einem der vorhergehenden Ansprüche, **dadurch gekennzeichnet, dass** die Zusammensetzung eine wirksame Menge eines Oberflächenspannungsmodifikationsmittels umfasst, das kein Silikon enthält.

## Claims

1. Laminated glazing comprising a sheet of polymer material colour printed, via screen printing, using a composition comprising:
- 10% to 15% by weight of polyvinyl butyral,
- 32% to 45% by weight of at least one solvent predominantly consisting of at least one aliphatic dicarboxylic acid diester, and
- at least one white pigment in an amount and with a specific surface area that are selected so that the Brookfield viscosity of the composition at 20°C is between 9 and 13 Pa.s.

2. Laminated glazing according to Claim 1, **characterized in that** the polyvinyl butyral of the composition has a molecular weight evaluated by gel permeation chromatography that is centred about a value at most equal to 90 000 and, in order of increasing preference, at most equal to 80 000, 70 000, 60 000 and 50 000 in polystyrene equivalents.

3. Laminated glazing according to either of the preceding claims, **characterized in that** the polyvinyl butyral of the composition has a molecular weight evaluated by gel permeation chromatography that is centred about a value at least equal to 20 000, preferably 30 000 in polystyrene equivalents.

4. Laminated glazing according to one of the preceding claims, **characterized in that** the [OH] content of the polyvinyl butyral of the composition corresponds to a weight percentage of polyvinyl alcohol of between 17% and 22%.

5. Laminated glazing according to one of the preceding claims, **characterized in that** said at least one aliphatic dicarboxylic acid diester is selected from a succinate, a glutarate and an adipate.

6. Laminated glazing according to one of the preceding claims, **characterized in that** said at least one white pigment comprises titanium dioxide.

7. Laminated glazing according to one of the preceding claims, **characterized in that** said at least one white pigment comprises rutile titanium dioxide.

8. Laminated glazing according to one of the preceding claims, **characterized in that** said at least one white pigment is in an amount of between 32% and 42% by weight of the composition.

9. Laminated glazing according to one of the preceding claims, **characterized in that** said at least one solvent consists, in a minority amount, of glycol ether.

10. Laminated glazing according to one of the preceding claims, **characterized in that** said at least one solvent consists, in a minority amount, of triethylene glycol dimethyl ether.

11. Laminated glazing according to one of the preceding claims, **characterized in that** the composition contains 0.5% to 3% by weight of carbon black.

12. The laminated glazing according to one of the preceding claims, **characterized in that** the composition comprises an effective amount of plasticizer as wetting agent.

13. Laminated glazing according to one of the preceding claims, **characterized in that** the composition comprises an effective amount of a surface tension modifier that does not contain silicone.
